# EUROPÄISCHE PATENTSCHRIFT

(11) **EP 1 519 177 B1**
(45) Veröffentlichungstag und Bekanntmachung des Hinweises auf die Patenterteilung: **26.04.2006**
(21) Anmeldenummer: 03021761.6
(22) Anmeldetag: 25.09.2003
(51) Int. Cl.: G01M 1/00, G01M 1/14

(54) **Verfahren zur Kalibrierung einer Radauswuchtmaschine und Radauswuchtmaschine**
Method for calibration of a tire balancing machine and apparatus therefore
Procédé de calibrage un appareil d'equilibrage des pneus et machine d'équilibrage de pneus

(43) Veröffentlichungstag der Anmeldung: 30.03.2005
(73) Patentinhaber: Snap-on Equipment Srl a unico socio., 42015 Correggio (Reggio Emilia) (IT)
(72) Erfinder: Braghiroli, Francesco, 42100 Reggio Emilia (IT)
(74) Vertreter: Nöth, Heinz

(56) Entgegenhaltungen:
- US-A- 4 494 400
- US-A- 5 396 436

## Beschreibung

Die Erfindung betrifft ein Verfahren zur Kalibrierung einer Radauswuchtmaschine, welche eine drehbar gelagerte Messwelle zur Unwuchtmessung von Fahrzeugrädern aufweist, bei dem wenigstens ein Unwuchtmesslauf mit bloßer Messwelle und wenigstens zwei weitere aufeinanderfolgende Unwuchtmessläufe, bei denen Testgewichte mit vorgegebener Masse in zwei einen axialen Abstand voneinander aufweisenden vorgegebenen Kalibrierebenen befestigt werden, durchgeführt werden und in Abhängigkeit von den dabei von zwei an die Messwelle gekoppelten Messgebern gemessenen Kräften die Messelektronik und/oder die Messanzeige der Radauswuchtmaschine eingestellt wird bzw. werden sowie eine Radauswuchtmaschine.

Ein derartiges Verfahren ist aus der EP 0 133 229 B1 bekannt. Damit die in den verschiedenen Messläufen gewonnenen Kräfte der jeweils zugehörigen Kalibrierebene zugeordnet werden, ist es bekannt, die wenigstens drei Unwuchtmessläufe für die Kalibrierung in einer bestimmten Reihenfolge durchzuführen. Beispielsweise wird zuerst der Messlauf mit bloßer Messwelle ohne Testgewichte, dann der Messlauf mit in der linken Kalibrierebene eingesetztem Testgewicht und anschließend der Messlauf mit in der rechten Kalibrierebene eingesetztem Testgewicht durchgeführt. Hierbei besteht jedoch die Gefahr, dass die Messläufe in ihrer Reihenfolge vertauscht werden, so dass eine falsche Kalibrierung der Radauswuchtmaschine sich ergibt. Außerdem treten Fehler der Kalibrierung dadurch auf, dass zwei Messläufe mit bloßer Messwelle und ein Messlauf mit einem Testgewicht in einer der beiden Kalibrierebenen durchgeführt wird.

Aufgabe der Erfindung ist es daher, ein Verfahren der eingangs genannten Art zu schaffen, bei welchem unabhängig von der Reihenfolge der bei der Kalibrierung durchgeführten Unwuchtmessläufe eine korrekte Kalibrierung der Radauswuchtmaschine erreicht wird.

Diese Aufgabe wird erfindungsgemäß durch die kennzeichnenden Merkmale des Patentanspruches 1 gelöst.

Hierzu werden die von einem der beiden Messgeber in den wenigstens drei Unwuchtmessläufen bei der Kalibrierung jeweils gemessenen Kräfte zueinander in Beziehung gebracht, wobei die geringste Kraft der drei gemessenen Kräfte dem Unwuchtmesslauf mit der bloßen Messwelle zugeordnet wird und die bei den wenigstens zwei weiteren Messläufen gemessenen Kräfte aufgrund ihrer Unterschiede der jeweils zugehörigen Kalibrierebene zugeordnet werden. Hierzu wird die größere Kraft der Kalibrierebene zugeordnet, welche weiter vom Messgeber entfernt liegt, und die geringere Kraft der Kalibrierebene zugeordnet, welche näher zum Messgeber liegt. Auf diese Weise erreicht man eine korrekte Zuordnung der bei den jeweiligen Unwuchtmessläufen (Kalibrierläufen) gemessenen Kräfte und der abgeleiteten Unwuchtvektoren zu dem Kalibrierlauf mit bloßer Welle sowie zu dem Kalibrierlauf mit in der linken Kalibrierebene eingesetztem Testgewicht und zu dem Kalibrierlauf mit in der rechten Kalibrierebene eingesetztem Testgewicht. Diese korrekte Zuordnung erreicht man unabhängig davon, in welcher Reihenfolge die Unwuchtmessläufe (Kalibrierläufe) durchgeführt werden.

Die Erfindung eignet sich zur Kalibrierung von Radauswuchtmaschinen, bei denen die an die Messwelle gekoppelten Messgeber im axialen Abstand voneinander angeordnet sind, wie es beispielsweise aus der EP 0 133 229 B1 bekannt ist. Diese Kalibrierung kann jedoch auch bei solchen Radauswuchtmaschinen durchgeführt werden, wie sie aus EP 1 108 204 B1 oder aus EP 0 058 860 B1 bekannt sind.

In vorteilhafter Weise wird das Testgewicht, welches eine Masse von beispielsweise 100 g aufweist, in den aufeinanderfolgenden Messläufen mit einem bestimmten Winkelunterschied in den Kalibrierebenen an der Messwelle in gleichen Radien befestigt. Die Befestigung kann dabei an einem dynamisch ausgewuchteten Rotor, welcher an der Messwelle befestigt ist, erfolgen. Vorzugsweise beträgt der Winkelunterschied 180°.

Vorzugsweise wird von den bei den Unwuchtvektoren, welche bei den Kalibrierläufen mit den Testgewichten ermittelt werden, vektoriell der Unwuchtvektor subtrahiert, welcher beim Kalibrierlauf der bloßen Messwelle ohne Testgewicht ermittelt wurde.

Bei insbesondere mit Winkelunterschied in den Kalibrierebenen angeordnetem Testgewicht wirkt sich eine eventuelle Restunwucht der bloßen Messwelle unterschiedlich auf die in den beiden Kalibrierläufen ermittelten Unwuchten aus. Durch oben beschriebene Vektorsubstraktion wird dieser unterschiedliche Einfluss kompensiert.

Anhand der Figuren wird die Erfindung noch näher erläutert.

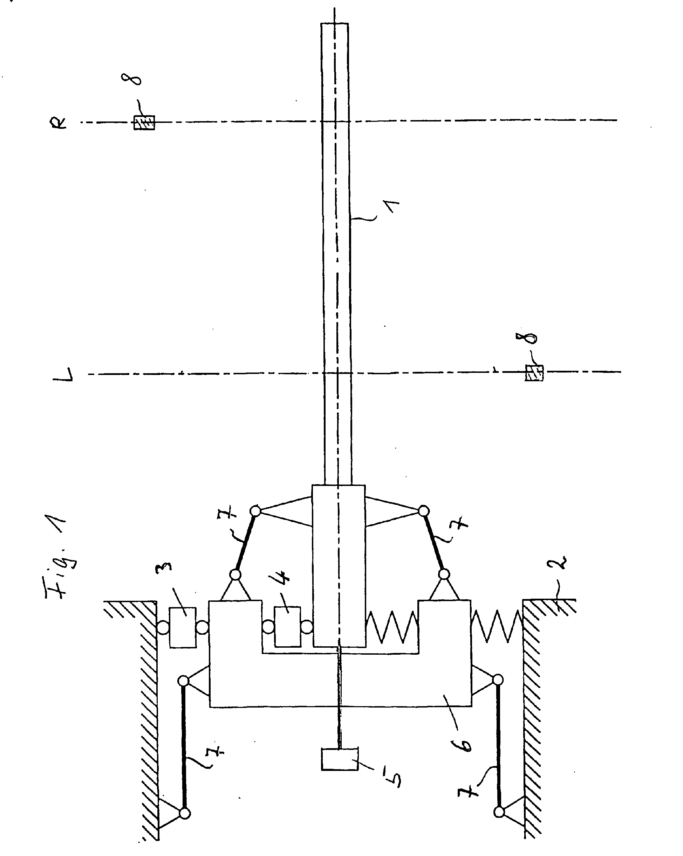

Es zeigt
- Fig. 1: eine Messanordnung einer Radauswuchtmaschine; und

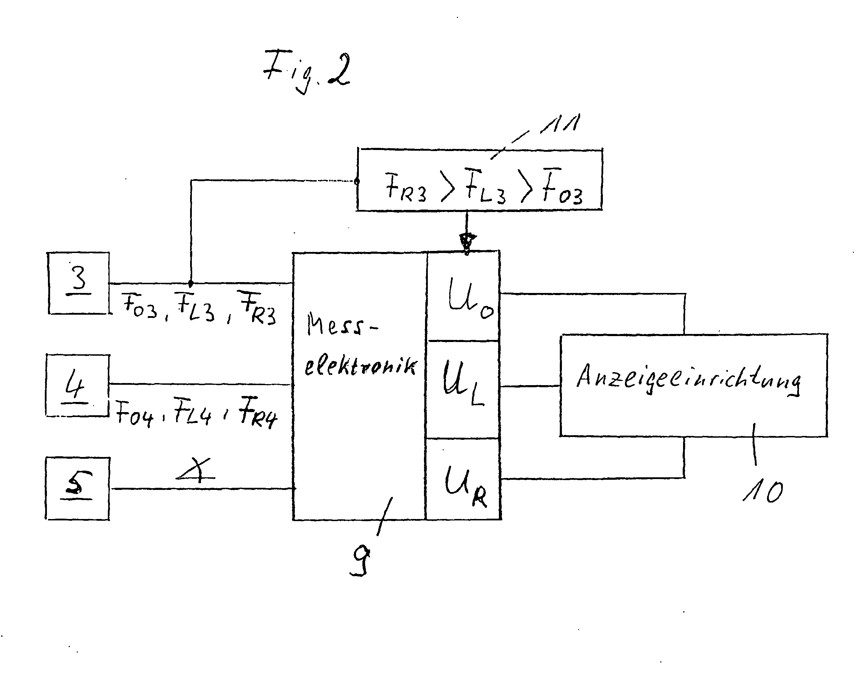

- Fig. 2: ein Blockschaltbild zur Auswertung der beim Kalibrieren gemessenen Kräfte in der Radauswuchtmaschine.

Die Figuren zeigen eine Radauswuchtmaschine mit einer Messanordnung, wie sie aus EP 1 108 204 B1 bekannt ist. Bei dieser Messanordnung wird eine Messwelle der Radauswuchtmaschine mit Vorspannung über zwei Messgeber 3, 4 und einen Zwischenrahmen 6 gegenüber dem Maschinenrahmen 2 abgestützt. Eine weitere Abstützung gegenüber dem Maschinenrahmen 2 erfolgt über Stützhebel 7 in der Weise, wie sie im einzelnen in EP 1 108 204 B1 beschrieben ist.

Mittels eines nicht näher dargestellten, insbesondere dynamisch ausgewuchteten Rotors kann ein Testgewicht 8 beispielsweise mit einer Kalibriermasse von 100 g in einem bestimmten Radius in einer linken Kalibrierebene L an der Messwelle 1 befestigt werden. Ferner kann das Testgewicht 8 in einer rechten Kalibrierebene R im gleichen radialen Abstand, wie in der linken Kalibrierebene, an der Messwelle 1 befestigt werden. Die Kalibrierebenen L und R können unterschiedlich zu den Ausgleichsebenen eines auszuwuchtenden Rades sein oder die gleiche Lage wie die Ausgleichsebenen aufweisen.

Zur Kalibrierung der Radauswuchtmaschine, insbesondere einer Messelektronik 9 und einer Unwuchtanzeigeeinrichtung 10 wird ein Kalibrierlauf mit bloßer Messwelle 1 ohne Testgewicht durchgeführt. Dabei wird vom Messgeber 3 eine Kraft F₀₃ und vom Messgeber 4 eine Kraft F₀₄ gemessen. Die Messung der Kräfte in den Messgebern 3 und 4 erfolgt winkelbezogen mit Hilfe des Drehwinkelgebers 5. Die Messelektronik 9 der Auswuchtmaschine bildet aus diesen Messergebnissen einen Unwuchtvektor U₀ in bekannter Weise.

In einem weiteren Kalibrierlauf wird das Testgewicht 8 in der linken Kalibrierebene L im vorbestimmten Radius an der Messwelle 1 befestigt. Dabei werden von den Messgebern 3 und 4 Kräfte K_{L3} und K_{L4} gemessen, welche aus den vom Testgewicht 8 erzeugten Fliehkräften resultieren. Auch diese Kräfte werden mit Hilfe des Drehwinkelgebers 5 winkelbezogen gemessen und hieraus ein Unwuchtvektor U_{L} von der Messelektronik 9 für die Unwuchtanzeige an der Maschine ermittelt.

In einem weiteren Kalibrierlauf wird das Testgewicht 8 in gleichem Abstand wie in der linken Kalibrierebene L in der rechten Kalibrierebene R an der Messwelle 1 befestigt. Bei diesem Kalibrierlauf werden von den Messgebern 3 und 4 Kräfte K_{R3} und K_{R4} gemessen, aus denen mit Hilfe des Drehwinkelgebers 5 ein Unwuchtvektor U_{R} mit Hilfe der Maschinenelektronik 9 ermittelt und an der Anzeigeeinrichtung angezeigt wird.

Die Maschinenelektronik herkömmlicher Radauswuchtmaschinen ist nicht in der Lage zu unterscheiden, ob bei der Messung das Testgewicht 8 in der linken Kalibrierebene L oder in der rechten Kalibrierebene R angeordnet ist. Bei herkömmlichen Maschinen wird daher eine bestimmte Reihenfolge, beispielsweise derart, wie sie oben beschrieben ist, eingehalten, um eine Zuordnung der ermittelten Unwuchten zu den Kalibrierläufen zu erhalten. In der Praxis ergibt sich hieraus jedoch die Gefahr einer falschen Kalibrierung der Maschine, da eine Verwechslung der Reihenfolge der Kalibrierläufe nicht auszuschließen ist und in der Praxis häufig vorkommt.

Um diese Fehlerquelle auszuschließen, wird bei der Erfindung eine zusätzliche Auswertung der von wenigstens einem der beiden Messgeber 3 und 4 erzeugten Kräftesignale durchgeführt. Im dargestellten Ausführungsbeispiel werden die Kräfte des Messgebers 3 ausgewertet. Der Messgeber 3 liefert während der oben erläuterten aufeinanderfolgenden Kalibrierläufe die Kräftesignale F₀₃, F_{L3} und F_{R3}. Aufgrund der unterschiedlichen Hebelarme, welche beim Einsetzen des Testgewichts 8 in die linke und die rechte Kalibrierebene wirken, ist F_{R3} > F_{L3} > F₀₃. In einer zusätzlichen Auswerteeinrichtung 11, welche auch in die Maschinen- oder Messelektronik 9 integriert sein kann, wird diese sich aus den Kräfteunterschieden ergebenden Reihenfolge erfasst. Mit Hilfe der Auswerteeinrichtung 11 wird die größte Kraft F_{R3} dem Kalibrierlauf zugeordnet, bei welchen das Testgewicht 8 in der rechten Kalibrierebene R angeordnet war, und damit dem hierzu bestimmten Unwuchtvektor U_{R} zugeordnet.

Die zweitgrößte Kraft F_{L3} wird dem Kalibrierlauf zugeordnet, bei welchem das Testgewicht 8 in der linken Kalibrierebene L angeordnet war, und somit dem dabei ermittelten Unwuchtvektor U_{L} zugeordnet.

Die kleinste gemessene Kraft F₀₃ wird dem Kalibrierlauf zugeordnet, bei welchem die bloße Messwelle 1 umlief, dem dabei ermittelten Unwuchtvektor U₀ zugeordnet. Im Gegensatz zum Stand der Technik wird bei der Erfindung in Abhängigkeit von den Kräften, welche in den jeweiligen Kalibrierläufen von wenigstens einem der Messgeber gemessen werden, die Zuordnung der ermittelten Unwuchtvektoren zu den Kalibrierebenen, wie erläutert, durchgeführt.

Anstelle der Kraftmesswerte des Messgebers 3 können in gleicher Weise die vom Messgeber 4 gemessenen Kräfte F₀₄, F_{L4} und F_{R4}, wie beschrieben, ausgewertet werden. Für eine eventuelle Kontrolle können die Auswertungen beider Messgeber 3 und 4 miteinander verglichen werden.

Auf diese Weise erreicht man eine Zuordnung der bei den Kalibrierläufen ermittelten Unwuchtvektoren zu den zugehörigen Kalibrierläufen und zugehörigen Kalibrierebenen L und R unabhängig von der Reihenfolge der durchgeführten Kalibrierläufe. Mit Hilfe der Anzeigeeinrichtung 10, an welcher die Unwuchtvektoren nach Masse und Winkellage angezeigt werden, kann die Kalibrierung in bekannter Weise derart erfolgen, dass für die linke Kalibrierebene L entsprechende elektrische oder elektronische Bauteile der Messelektronik 9 und/oder der Anzeigeeinrichtung 10 mit einem an der Maschine vorgesehenen Betätigungselementes, beispielsweise in Form eines Drehknopfes, so lange verstellt werden, bis die Anzeige des Unwuchtvektors in der rechten Kalibrierebene R zu Null wird. In gleicher Weise können mit Hilfe eines weiteren Betätigungselementes entsprechende elektronische oder elektrische Bauteile der Messelektronik 9 oder Anzeigeeinrichtung 10 so verstellt werden, dass die Unwuchtvektoranzeige für die linke Kalibrierebene L zu Null wird oder verschwindet und nur noch die Vektoranzeige für die rechte Kälibrierebene R vorliegt. Ferner kann eine Angleichung der Massenanzeige und Winkelanzeige für die jeweilige Kalibrierebene erfolgen.

Die beschriebene Zuordnung der ermittelten Unwuchtvektoren zu den dazugehörigen Kalibrierläufen und damit zu den zugehörigen Kalibierebenen kann bei solchen Auswuchtmaschinen durchgeführt werden, bei denen unterschiedliche Abstände der Kalibrierebenen von dem wenigstens einen Messgeber der Messanordnung vorhanden sind.

Mit Hilfe des erläuterten Verfahrens können auch solche Fehler erfasst werden, bei denen einer der wenigstens drei Kalibrierläufe doppelt durchgeführt wurde. Es ergeben sich dann für die beiden Kalibrierläufe, insbesondere bei den Kraftmesswerten und auch bei den Winkelmesswerten keine oder nur geringe Unterschiede. Wenn beispielsweise zwei Kalibrierläufe mit dem Testgewicht 8 in der linken Kalibrierebene und ein Kalibrierlauf mit bloßer Messwelle 1 durchgeführt wurden, ergeben sich für die Kalibrierläufe mit dem Testgewicht keine oder nur geringe Unterschiede bei den Kraftmesswerten und Winkelmesswerten. Äquivalente Ergebnisse ergeben sich bei Kalibrierläufen, bei denen nur in der rechten Kalibrierebene das Testgewicht eingesetzt war oder bei zwei Kalibrierläufen mit bloßer Messwelle 1 und dem Testgewicht in einem der beiden Kalibrierebenen. Mit Hilfe der Erfindung können derart fehlerhaft durchgeführte Kalibrierungen erfasst und gegebenenfalls durch eine Fehleranzeige kenntlich gemacht werden.

Die Erfindung zeigt somit ein Verfahren und eine Vorrichtung zur Kalibrierung einer Radauswuchtmaschine, welche eine drehbar gelagerte Messwelle 1 zur Unwuchtmessung eines Fahrzeugrades aufweist, bei dem ein Testgewicht 8 zeitlich aufeinanderfolgend in einer linken Kalibrierebene L und einer rechten Kalibrierebene R angeordnet wird und dabei Kalibrierläufe durchgeführt werden, und ferner mit bloßer Messwelle 1 ein Kalibrierlauf durchgeführt wird. Diese Kalibrierläufe können mit beliebiger Reihenfolge aufeinander erfolgen. Die von wenigstens einem der beiden Messgeber 3, 4 in den drei Kalibrierläufen gemessenen Kräfte werden im Hinblick auf ihre Unterschiede beurteilt, wobei die geringste Kraft dem Kalibriermesslauf mit der bloßen Messwelle 1, die größte gemessene Kraft der Kalibrierebene R, welche am weitesten vom Messgeber entfernt liegt, und die dazwischenliegende Kraft der Kalibrierebene L, welche näher zum Messgeber liegt, für die Kalibriereinstellung der Radauswuchtmaschine zugeordnet werden.

Ein Winkelunterschied von insbesondere 180° für die Befestigungsstellen des Testgewichtes in den Kalibrierebenen wird bevorzugt; jedoch können die Befestigungsstellen in den beiden Kalibrierebenen auch die gleich Winkellage aufweisen.

### [Bezugszeichenliste]

- 1: Messwelle
- 2: Maschinenrahmen
- 3,4: Kraftmessgeber
- 5: Drehwinkelgeber
- 6: Zwischenrahmen
- 7: Stützhebel
- 8: Testgewicht
- 9: Messelektronik
- 10: Anzeigeeinrichtung
- 11: zusätzliche Auswerteeinrichtung

## Patentansprüche

1. Verfahren zur Kalibrierung einer Radauswuchtmaschine, welche eine drehbar gelagerte Messwelle zur Unwuchtmessung an Fahrzeugrädern aufweist, bei dem wenigstens ein Unwuchtmesslauf mit bloßer Messwelle und wenigstens zwei weitere aufeinanderfolgende Unwuchtmessläufe, bei denen ein Testgewicht mit vorgegebener Masse in zwei im axialen Abstand voneinander angeordneten, vorgegebenen Kalibrierebenen jeweils befestigt wird, durchgeführt werden und in Abhängigkeit von den dabei mit zwei an die Messwelle kraftschlüssig gekoppelten Kraftmessgebern gemessenen Kräften die Messelektronik und/oder die Anzeigeeinrichtung der Radauswuchtmaschine eingestellt wird oder werden,
**dadurch gekennzeichnet, dass** die von wenigstens einem der beiden Messgeber in den drei Unwuchtmessläufen jeweils gemessenen Kräfte zueinander hinsichtlich ihrer Unterschiede zueinander in Beziehung gesetzt werden, wobei die geringste Kraft dem Unwuchtmesslauf mit der bloßen Messwelle zugeordnet wird und die bei den wenigstens zwei weiteren Messläufen gemessenen Kräfte aufgrund ihrer Unterscheide der jeweils zugehörigen Kalibrierebene zugeordnet werden, wobei die größere Kraft der Kalibrierebene, welche weiter vom wenigstens einen Messgeber entfernt liegt, und die geringere Kraft der Kalibrierebene, welche näher zum wenigstens einen Messgeber liegt, für die Kalibriereinstellung zugeordnet werden.

2. Verfahren nach Anspruch 1,
**dadurch gekennzeichnet, dass** das Testgewicht mit einem vorgegebenen Winkelunterschied in den Kalibrierläufen an der Messwelle befestigt werden.

3. Verfahren nach Anspruch 2,
**dadurch gekennzeichnet, dass** der Winkelunterschied 180° beträgt.

4. Verfahren nach einem der Ansprüche 1 bis 3,
**dadurch gekennzeichnet, dass** von den in den Unwuchtmessläufen mit dem Testgewicht ermittelten Unwuchtvektoren der Unwuchtvektor vektoriell substrahiert wird, welcher beim Messlauf mit bloßer Messwelle ermittelt wird.

5. Radauswuchtmaschine mit einer drehbar anzutreibenden Messwelle (1), wenigstens zwei Kraftmessgebern (3, 4), die kraftschlüssig mit der Messwelle (1) verbunden sind, einem mit der Messwelle (1) verbundenen Drehwinkelgeber (5), welcher den jeweiligen Drehwinkeln der Messwelle (1) proportionale Winkelsignale liefert, einer Messelektronik (9), an welche die Kraftmessgeber (3, 4) und der Drehwinkelgeber (5) angeschlossen sind und einer Anzeigeeinrichtung (10) zur Anzeige von ermittelten Unwuchtvektoren für ein an der Messwelle (1) zu befestigendes Fahrzeugrad,
**dadurch gekennzeichnet, dass** an wenigstens einem der Kraftmessgeber (3, 4) eine Auswerteeinrichtung (11) angeschlossen ist, welche bei einem Kalibriervorgang die in wenigstens drei Kalibrierläufen mit bloßer Messwelle (1) und zwei weiteren Kalibrierläufen mit in einer linken Kalibrierebene (L) und in einer rechten Kalibrierebene (R) eingesetztem Testgewicht (8) gemessenen Kräfte sowie die Unterschiede der gemessenen Kräfte erfasst und in Abhängigkeit von den Unterschieden der gemessenen Kräfte, die bei den Kalibrierläufen ermittelten Unwuchtvektoren (U_{L}, U_{R}) den beiden Kalibrierebenen (L, R) zuordnet.

## Revendications

1. Procédé pour étalonner une machine à équilibrer les roues munie d'un arbre de mesure monté tournant et destiné à mesurer le balourd de roues de véhicule, d'après lequel on exécute au moins une opération de mesure de balourd à l'aide du seul arbre de mesure et au moins deux autres opérations de mesure de balourd successives pendant lesquelles un poids d'essai à masse prédéfinie est respectivement fixé à deux plans d'étalonnage prédéfinis et placés à distance axiale l'un par rapport à l'autre, et d'après lequel on règle l'électronique de mesure et/ou l'installation d'affichage de la machine à équilibrer les roues en fonction des forces alors mesurées à l'aide de deux indicateurs de force couplés par combinaison de forces à l'arbre de mesure,
**caractérisé en ce que** les forces respectivement mesurées pendant les trois opérations de mesure de balourd par au moins un des deux indicateurs de force sont mises en rapport l'une avec l'autre quant à leurs différences, la force la plus petite étant associée à l'opération de mesure de balourd à l'aide du seul arbre de mesure et les forces mesurées pendant les au moins deux autres opérations de mesure sont associées, sur la base de leurs différences, au plan d'étalonnage respectivement correspondant, et pour régler l'étalonnage la force la plus grande est associée au plan d'étalonnage qui est plus éloigné de l'au moins un indicateur de force et la force la plus petite au plan d'étalonnage qui est plus proche de l'au moins un indicateur de force.

2. Procédé selon la revendication 1, **caractérisé en ce que** le poids d'essai est fixé à l'arbre de mesure en faisant une différence d'angle prédéfinie pendant les opérations d'étalonnage.

3. Procédé selon la revendication 2, **caractérisé en ce que** la différence d'angle est de 180°.

4. Procédé selon l'une des revendications 1 à 3, **caractérisé en ce que** le vecteur de balourd qui a été déterminé lors de l'opération de mesure à l'aide du seul arbre de mesure est soustrait vectoriellement des vecteurs de balourd déterminés à l'aide du poids d'essai pendant les opérations de mesure de balourd.

5. Machine à équilibrer les roues comportant un arbre de mesure (1) à entraîner en rotation, au moins deux indicateurs de force (3, 4) reliés par combinaison de forces à l'arbre de mesure (1), un générateur d'angle de rotation (5) qui est relié à l'arbre de mesure (1) et qui fournit des signaux d'angle proportionnels aux angles de rotation de l'arbre de mesure (1), une électronique de mesure (9) à laquelle sont raccordés les indicateurs de force (3, 4) et le générateur d'angle de rotation (5) et une installation d'affichage (10) pour afficher les vecteurs de balourd déterminés pour une roue de véhicule à fixer à l'arbre de mesure (1),
**caractérisé en ce qu'**à au moins un des indicateurs de force (3, 4) est raccordée une installation d'exploitation (11) qui lors d'un processus d'étalonnage détecte les forces mesurées pendant au moins trois opérations d'étalonnage à l'aide du seul arbre de mesure (1) et pendant deux autres opérations d'étalonnage à l'aide d'un poids d'essai (8) placé dans un plan d'étalonnage gauche (L) et dans un plan d'étalonnage droit (R) ainsi que les différences entre les forces mesurées et associe aux deux plans d'étalonnage (L, R) en fonction des différences entre les forces mesurées les vecteurs de balourd (U_{L}, U_{R}) déterminés pendant les opérations d'étalonnage.

## Claims

1. A method of calibrating a wheel balancing machine having a rotatably mounted measuring shaft for unbalance measurement on vehicle wheels, in which at least one unbalance measuring run with a bare measuring shaft and at least two further successive unbalance measuring runs in which a test weight of a predetermined mass is respectively fixed in two predetermined calibration planes arranged at an axial spacing from each other are effected and in dependence on the forces measured in that procedure with two force measuring senders coupled to the measuring shaft in force-locking relationship the electronic measuring system and/or the display device of the wheel balancing machine is or are set,
**characterised in that** the forces respectively measured by at least one of the two measuring senders in the three unbalance measuring runs are brought into relationship with each other in respect of their differences, wherein the smallest force is associated with the unbalance measuring run with the bare shaft and the forces measured in the at least two further measuring runs are associated with the respectively belonging calibration plane on the basis of their differences, wherein the higher force is associated with the calibration plane which is further away from the at least one measuring sender and the lower force is associated with the calibration plane which is closer to the at least one measuring sender, for calibration setting.

2. A method according to claim 1
**characterised in that** the test weight is fixed to the measuring shaft with a predetermined angular difference in the calibration runs.

3. A method according to claim 2
**characterised in that** the angular difference is 180°.

4. A method according to one of claims 1 to 3
**characterised in that** the unbalance vector which is ascertained in the measuring run with a bare measuring shaft is vectorially subtracted from the unbalance vectors ascertained in the unbalance measuring runs with the test weight.

5. A wheel balancing machine comprising a measuring shaft (1) which is to be driven in rotation, at least two force measuring senders (3, 4) which are connected to the measuring shaft (1) is force-locking relationship, a rotary angle sender (5) which is connected to the measuring shaft (1) and which supplies angle signals proportional to the respective rotary angles of the measuring shaft (1), an electronic measuring system (9) to which the force measuring senders (3, 4) and the rotary angle sender (5) are connected and a display device (10) for the display of ascertained unbalanced vectors for a vehicle wheel to be fixed to the measuring shaft (1),
**characterised in that** connected to at least one of the force measuring senders (3, 4) is an evaluation device (11) which, in a calibration operation, detects the forces measured in at least three calibration runs with a bare measuring shaft (1) and two further calibration runs with a test weight (8) fitted in a left-hand calibration plane (L) and in a right-hand calibration plane (R) as well as the differences in the measured forces and in dependence on the differences in the measured forces associates the unbalance vectors (U_{L}, U_{R}) ascertained in the calibration runs with the two calibration planes (L, R).
